# EUROPEAN PATENT APPLICATION

(11) **EP 4 806 717 A1**
(43) Date of publication of application: **16.09.2026**
(21) Application number: 26164413.2
(22) Date of filing: 12.03.2026
(51) Int. Cl.: B60L 53/14, B60L 53/30

(54) **AN ELECTRIC VEHICLE CHARGING POINT**

(30) Priority: 12.03.2025 GB 202503652
(71) Applicant: F.W. Thorpe Public Limited Company, Redditch Worcestershire B98 9HH (GB)
(72) Inventor: THORPE, Max Andrew, Redditch, B98 9HH (GB)
(74) Representative: Swindell & Pearson Limited

(57) **Abstract**

An electric vehicle charging point comprising: a circuitry enclosure configured to house circuitry for charging an electric vehicle; a mounting assembly configured to be attached to the circuitry enclosure, wherein the mounting assembly comprises a securing portion; a body configured to at least partially cover the circuitry enclosure and to at least partially cover the mounting assembly, wherein the body comprises plant tissue; and a fixing arrangement configured to connect the body to the securing portion of the mounting assembly, wherein the fixing arrangement comprises a bias configured to enable movement of the body in relation to the mounting assembly when the body is connected to the mounting assembly.

## Description

### TECHNOLOGICAL FIELD

Examples of the disclosure relate to an electric vehicle charging point.

### BACKGROUND

Electric vehicle charging points are used to provide charge to electric and hybrid vehicles.

### BRIEF SUMMARY

According to various, but not necessarily all, examples there is provided an electric vehicle charging point comprising: a circuitry enclosure configured to house circuitry for charging an electric vehicle; a mounting assembly configured to be attached to the circuitry enclosure, wherein the mounting assembly comprises a securing portion; a body configured to at least partially cover the circuitry enclosure and to at least partially cover the mounting assembly, wherein the body comprises plant tissue; and a fixing arrangement configured to connect the body to the securing portion of the mounting assembly, wherein the fixing arrangement comprises a bias configured to enable movement of the body in relation to the mounting assembly when the body is connected to the mounting assembly.

In some but not necessarily all examples, the body may be made from tree tissue. The body may be made from wood. The body may be made from cork.

The fixing arrangement may comprise a fastener configured to extend through a connecting hole in the body.

In at least one direction, the connecting hole in the body may be 1.4 times wider than the fastener.

The fastener may comprise an elongate shaft, and the bias may be imparted along an axis parallel to the elongate shaft of the fastener.

The fixing arrangement may comprise a mating part configured to receive and engage with a portion of the fastener through the securing portion such that the body and the mounting assembly are connected.

The mating part may comprise a stop configured to restrict the portion of the fastener received by the mating part.

The electric vehicle charging point may comprise a compression limiter configured to limit further tightening of the fixing arrangement and enable a degree of freedom of movement of the body when the fixing arrangement is at a peak tightness as determined by the compression limiter.

The fixing arrangement may comprise a spring configured to create the bias.

The spring may be a helical spring comprising more than one turn.

The spring may be arranged between the body and the securing portion.

When the body is connected to the circuitry enclosure, a spacing may be provided between turns of the spring.

The mounting assembly may comprise a plurality of securing portions, wherein the fixing arrangement may be configured to connect the body to each securing portion.

The fixing arrangement may comprise a plurality of fasteners each configured to extend through a respective connecting hole in the body to connect the body to a respective securing portion.

The body may comprise a longitudinal extent. The securing potion may be arranged parallel to the longitudinal extent of the body when the mounting assembly is attached to the circuitry enclosure and when the body is connected to the securing portion.

The mounting assembly may be arranged to mount the electric vehicle charging point to a surface.

The mounting assembly may be configured to form a seal with the circuitry enclosure to provide a closed enclosure for housing circuitry therein.

The circuitry enclosure may comprise an open face. The mounting assembly may comprise a plate. When the mounting assembly is attached to the circuitry enclosure, the plate of the mounting assembly may be arranged to cover the open face of the circuitry enclosure to form the seal with the circuitry enclosure.

The circuitry enclosure may comprise a socket configured to receive a charging connector for providing power from circuitry housed therein to an electric vehicle. The body may comprise a discontinuity arranged, when the body is connected to the mounting assembly, to receive at least a portion of the charging connector when connected to the socket of the circuitry enclosure.

The body may be arranged to receive a portion of a power supply configured to supply power to circuitry housed in the circuitry enclosure.

The circuitry enclosure may be arranged to form a cavity configured to house circuitry therein.

The electric vehicle charging point may comprise one or more light emitting diodes.

The electric vehicle charging point may be configured to provide a power output of at least 3 kW.

The power output from the electric vehicle charging point may be at least 3.6 kW.

The electric vehicle charging point may comprise circuitry housed within the circuitry enclosure. The circuitry may comprise at least one resistor. The circuitry may comprise a controller configured to communicate with the electric vehicle when connected to the electric vehicle charging point. The circuitry may comprise at least one relay or at least one contactor. The circuitry may comprise a radio frequency receiver. The circuitry may comprise a human machine interface module. The circuitry may comprise a display. The circuitry may comprise a radio frequency identification (RFID) reader. The circuitry may be configured to provide a visual indication of the status of the electric vehicle charging point. The circuitry may comprise one or more sensors.

The body may comprise a sloped upper surface to divert water runoff.

According to various, but not necessarily all, examples there is provided an electric vehicle charging point comprising: a circuitry enclosure configured to house circuitry for charging an electric vehicle; a mounting assembly configured to be attached to the circuitry enclosure, wherein the mounting assembly comprises a securing portion; a body configured to at least partially cover the circuitry enclosure and to at least partially cover the mounting assembly, wherein the body comprises a hygroscopic material; and a fixing arrangement configured to connect the body to the securing portion of the mounting assembly, wherein the fixing arrangement comprises a bias configured to enable movement of the body in relation to the mounting assembly when the body is connected to the mounting assembly.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example of an electric vehicle charging point providing charge to an electric vehicle;
FIG. 2 shows a schematic diagram of an example of an electric vehicle charging point as described herein;
FIG. 3 shows a schematic diagram of the electric vehicle charging point with a deformed cover;
FIG. 4 shows a close-up view of an example fixing arrangement;
FIG. 5 shows a schematic diagram of another example of an electric vehicle charging point as described herein; and
FIG. 6 shows a perspective view of the cover.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

Embodiments of the present disclosure relate to an electric vehicle charging point. In particular, an apparatus configured to provide a charge to an electric vehicle. The electric vehicle is a vehicle which uses electrical energy to provide propulsion. This includes all-electric vehicles, as well as hybrid vehicles which also comprise one or more combustion engines. The electric vehicle charging point may be a part of a charging station, comprising a plurality of charging points. The electric vehicle charging point may be herein referred to as a charging point, or an electric vehicle charger.

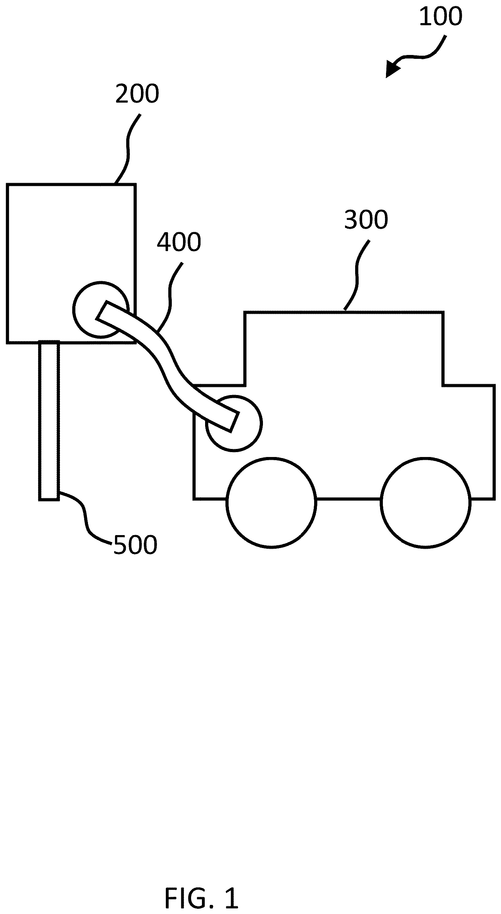

FIG. 1 shows an example 100 of an electric vehicle charging point 200 configured to provide an electric charge to an electric vehicle 300. The electric vehicle 300 may be a car, a van, a truck, a motorcycle, or the like.

The electric vehicle charging point 200 may be configured to provide an electric charge to the electric vehicle via a wired connection, such as a charging cable 400. The charging cable 400 may provide power from the electric vehicle charging point 200 to the electric vehicle 300 to charge a battery of the electric vehicle 300.

In some examples, the charging cable 400 may be removeable from the electric vehicle charging point 200. In other words, the electric vehicle charging point 200 may be an untethered charging point. The electric vehicle charging point 200 may comprise a socket to receive a corresponding connector of the charging cable 400. The electric vehicle 300 may comprise a socket to receive a corresponding connector of the charging cable 400.

In some examples, the charging cable 400 may be fixedly connected to the electric vehicle charging point 200. In other words, the electric vehicle charging point 200 may be a tethered charging point.

In some examples, the electric vehicle charging point 200 may be configured to provide an electric charge to the electric vehicle 300 via a wireless connection, e.g., by induction.

The electric vehicle charging point 200 may be configured to be waterproof and/or dustproof. In some examples, the electric vehicle charging point 200 may comprise an ingress protection (IP) rating of at least IP22, preferably at least IP54, preferably at least IP66.

In some examples, the electric vehicle charging point 200 may be configured to provide a power output of at least 3 kW, and preferably at least 3.6 kW, and preferably at least 4 kW. The power output of the electric vehicle charging point 200 may be at least 7 kW. The power output of the electric vehicle charging point 200 may preferably be between 5 kW and 25 kW, preferably between 7 kW and 22 kW. In some examples, the power output of the electric vehicle charging point 200 is 7.4 kW. In some examples, the power output of the electric vehicle charging point 200 is 22 kW. The current output from the electric vehicle charging point 200 may be at least 15 amps. In some examples, the electric vehicle charging point 200 is an alternating current (AC) charging point.

The electric vehicle charging point 200 may be a domestic electric vehicle charging point. In other words, the electric vehicle charging point 200 may be arranged at, or near, a domestic residence. In some examples, the electric vehicle charging point 200 may be for commercial charging. The electric vehicle charging point 200 may be for charging at a workplace.

A power supply 500 is connected to the electric vehicle charging point 200. The power supply 500 is arranged to provide power to circuitry housed inside the electric vehicle charging point 200. The circuitry housed inside the electric vehicle charging point 200 is configured to provide power from the power supply 500 to the electric vehicle 300. In some examples, the electric vehicle charging point 200 may be configured to convert the power before providing power to the electric vehicle 300. For example, the electric vehicle charging point 200 may convert AC power to DC power.

In the illustrated example of FIG. 1, the power supply 500 is provided from below the electric vehicle charging point 200. For example, the power supply 500 may be provided from wiring positioned underground, or may be connected to wiring positioned underground. It may be that the power supply 500 enters the electric vehicle charging point 200 from a bottom face, a front face, a back face or a side face of the electric vehicle charging point 200. In other examples, the electric vehicle charging point 200 may be mounted to a surface, such as a wall. The power supply 500 may be received by the electric vehicle charging point 200 through a face contacting, or in close proximity to, the surface the electric vehicle charging point 200 is mounted upon.

In some examples, the electric vehicle charging point 200 may comprise one or more light emitting diodes (LEDs), or may comprise at least one LED module. The LEDs may be arranged on a front face of the electric vehicle charging point 200, for example the face which the charging cable 400 is attached/attachable to (either as a tethered connection or an untethered connection). The one or more LEDs may be configured to provide an indication of the status of the electric vehicle charging point 200. For example, at least one of the one or more LEDs may be configured to emit light when the electric vehicle charging point 200 is providing charge to an electric vehicle. At least one of the one or more LEDs may be configured to emit light when the electric vehicle has been fully charged. At least one of the one or more LEDs may be configured to emit light when an error occurs when attempting to charge an electric vehicle using the electric vehicle charging point 200. At least one of the one or more LEDs may be controlled by circuitry housed in the electric vehicle charging point 200.

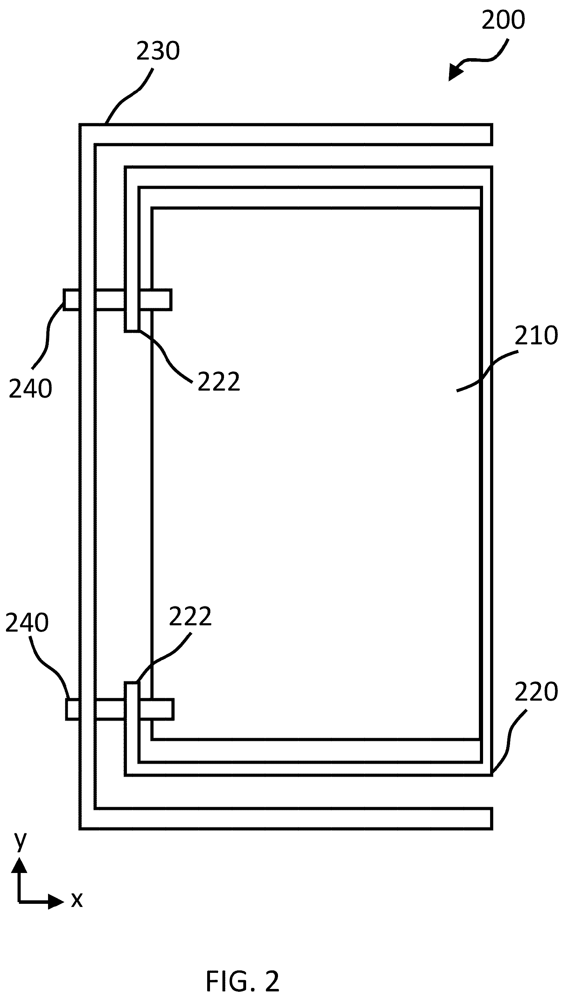

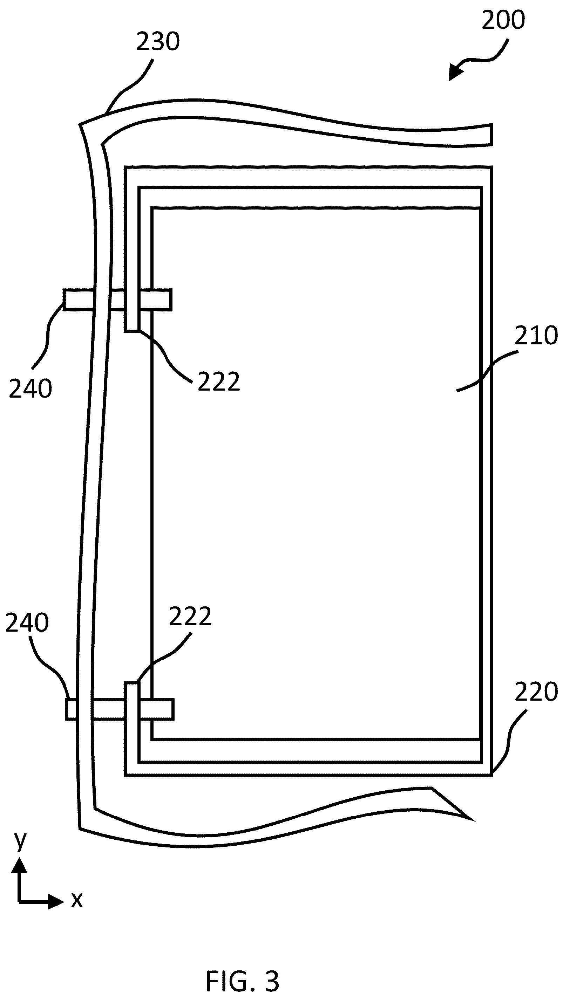

FIGs. 2 and 3 show a side-view of an example of an electric vehicle charging point 200, where the electric vehicle charging point 200 is for providing charge to an electric vehicle, as discussed above in relation to FIG. 1. The electric vehicle charging point 200 comprises a circuitry enclosure 210 configured to house circuitry for charging an electric vehicle, a mounting assembly 220 configured to be attached to the circuitry enclosure 210, a body 230 configured to at least partially cover the circuitry enclosure 210 and to at least partially cover the mounting assembly 220, and a fixing arrangement 240 to connect the body 230 to the mounting assembly 220.

The illustrated body 230 is in the form of a cover. The body 230 may comprise plant tissue, such as tree tissue. In some examples, the body 230 may comprise a hygroscopic material, such as wood or a wood plastic composite, which over time deforms when subjected to ambient conditions. For example, the body 230 may absorb moisture from the air which causes the body 230 to deform over time, such as warp, twist or split. In other words, the shape of the body 230 may change over time.

The body 230 may be formed from tissue from an epidermis of a tree. For example, the body 230 may be made from cork, or agglomerated cork (in which cork is agglomerated with a binder such as glue or a resin). In some examples, the body 230 is made from tissue from the xylem of a tree. For example, the body 230 may be made from wood. In some examples, the body 230 may be formed from a one or more plant tissues, e.g., one or more tissues from different parts of a tree. For example, a combination of wood and cork. Although the body 230, when formed from cork, may not swell as much as hygroscopic materials (such as wood), it may, over time, still potentially swell due to water ingress. In particular, the shape of the body 230 made from cork may change due to varying environmental conditions, e.g., cycling between freezing and thawing, or between dry and wet conditions. Therefore, cork will, over time, absorb moisture from air.

The body 230 may be of any shape. In some examples, the body 230 may be integrally formed, e.g., formed from one piece of wood. In some examples, the body 230 may be formed by attaching a plurality of pieces together.

FIGs. 2 and 3 are the same except FIG. 2 shows the body 230 before it has deformed, whereas FIG. 3 shows the body 230 after deformation. The deformation may occur over time.

Circuitry housed in the circuitry enclosure 210 comprises components arranged to receive power from a power supply, such as the power supply 500 illustrated in FIG. 1, and provide a power output for charging an electric vehicle. The circuitry may comprise at least one resistor. In some examples, the circuitry comprises an in-built controller configured to communicate with the electric vehicle when connected to the electric vehicle charging point. The circuitry may comprise at least one relay or at least one contactor (or a relay and a contactor). In some examples, the circuitry may be configured to measure the power output provided for charging the electric vehicle. In some examples, at least a portion of the circuitry may be configured to connect and communicate with a management platform. For example, the circuitry may comprise a radio frequency (RF) receiver, or a RF transceiver. The power output of the circuitry may be controlled by the management platform. The circuitry may comprise a human machine interface module. The circuitry may comprise a display. In some examples, the display is configured to provide an interface for a user. The circuitry may comprise a radio frequency identification (RFID) reader. The circuitry may be configured to provide a visual indication of the status of the electric vehicle charging point 200. For example, the circuitry may comprise one or more light emitting diodes (LEDs), configured to provide a different visual indication depending on the status of the electric vehicle charging point 200. This may be the same LEDs as described above. In some examples, the circuitry may comprise one or more sensors. In some examples, the electric vehicle charging point 200 may comprise at least one leakage current protection device. For example, the electric vehicle charging point 200 may comprise a type A (or type A+) leakage current protection device, such as a 6 mA DC leakage current protection device.

The circuitry enclosure 210 is arranged to form a cavity configured to house circuitry therein. In some examples, the circuitry enclosure 210 is a closed enclosure. In other words, the circuitry enclosure 210 itself may provide a waterproof enclosure for circuitry housed therein. This would include any opening required for receiving a power supply configured to supply power to the circuitry housed withing the circuitry enclosure. For example, the circuitry enclosure 210 may comprise a hole or a slot for receiving the power supply, but the hole or slot is arranged to form a waterproof seal around the power supply.

The circuitry enclosure 210 may be an open enclosure. In other words, the circuitry enclosure 210 may comprise an open face which is to be sealed to provide a waterproof enclosure for circuitry housed therein.

In some examples, the circuitry enclosure 210 may be integrally formed. The circuitry enclosure 210 may be formed from one or more rigid materials, such as plastic and/or metal.

The mounting assembly 220 may be attached to the circuitry enclosure 210 by a plurality of fasteners, such as screws or bolts. In other examples, the mounting assembly 220 may be attached to the circuitry enclosure 210 by a plurality of clips, arranged to receive mating parts to attach the mounting assembly 220 to the circuitry enclosure 210. In the illustrated example of FIGs. 2 and 3, the mounting assembly 220 may be attached to the circuitry enclosure 210 towards a rear face of the electric vehicle charging point 200, i.e., the face towards the highest value along the x-direction.

In some examples, the mounting assembly 220 may be arranged to mount the electric vehicle charging point 200 to a surface, such as a wall. For example, the mounting assembly 220 may comprise a mounting portion (for example a mounting bracket) configured to mount the electric vehicle charging point 200. The mounting assembly 220 may comprise a plurality of holes configured to receive a respective screw for mounting the electric vehicle charging point 200 to the surface. The electric vehicle charging point 200 may be configured to be assembled by attaching the circuitry enclosure 210 and the mounting assembly 220 before mounting to a surface. In some examples, the mounting assembly 220 may be arranged to be mounted to a surface first and then the circuitry enclosure 210 is attached to the mounting assembly 220.

In some examples, the mounting assembly 220, when attached to the circuitry enclosure 210, may be configured to form a (waterproof) seal with the circuitry enclosure 210 to provide a closed enclosure for housing circuitry therein. The mounting assembly 220 may comprise a plate configured to cooperate with an open face of the circuitry enclosure 210. When the plate of the mounting assembly 220 cooperates with the open face of the circuitry enclosure 210, and when the mounting assembly 220 is attached to the circuitry enclosure 210, the plate of the mounting assembly 220 is arranged to cover the open face of the circuitry enclosure 210 to form the seal with the circuitry enclosure 210. In particular, the connection between the edges of the circuitry enclosure 210 around the open face and the plate of the mounting assembly 220 forms a seal for protecting circuitry housed therein. The plate of the mounting assembly 220 may comprise a slot for receiving one or more edges of the circuitry enclosure 210.

In the illustrated example, the mounting assembly 220 comprises a plurality of securing portions 222. The securing portions 222 are configured to connect and secure a cover (e.g., the body 230) to the mounting assembly 220. In some examples, the mounting assembly 220 may comprise one or more securing portions 222. The illustrated examples of FIGs. 2 and 3 comprises two securing portions. Although illustrated as being arranged in a line along the y-direction, the two (or more) securing portions may be positioned in different arrangements. For example, they may be offset along the y-direction, x-direction or z-direction (where the x-, y- and z-directions are orthogonal to each other).

In some examples, the mounting assembly 220 may be integrally formed. The mounting assembly 220 may be formed from one or more rigid materials, such as plastic and/or metal.

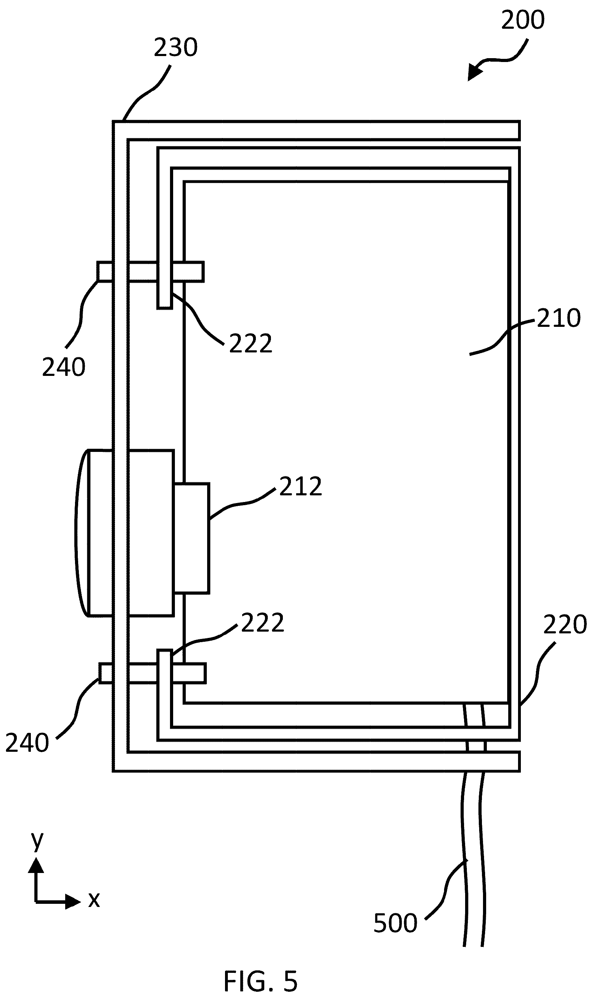

The body 230 is configured to at least partially cover the circuitry enclosure 210 and to at least partially cover the mounting assembly 220. In the illustrated example, the body 230 covers a plurality of faces of the mounting assembly 220, and of the circuitry enclosure 210. The body 230 may be configured to cover at least a portion of a front face of the circuitry enclosure 210 (i.e., the face of the illustrated circuitry enclosure 210 at the lowest value along the illustrated x-direction). In some examples, the front face of the circuitry enclosure 210 may comprise a socket for connecting a charging cable (as illustrated in FIG. 5). The body 230 may be configured to cover at least a portion of a front face and a portion of a top face of the circuitry enclosure 210 (i.e., the top face may be the face illustrated at the highest value along the y-direction of FIG. 2). The body 230 may be configured to cover at least a portion of a plurality of faces of the circuitry enclosure 210. In some examples, the body 230 may be configured to cover at least a portion of some of the faces of the circuitry enclosure 210 (i.e., not all of the faces). The body 230 may be configured to cover at least a portion of a plurality of faces of the mounting assembly 220. In some examples, the body 230 may be configured to cover at least a portion of some of the faces of the mounting assembly 220 (i.e., not all of the faces).

In the illustrated example, the body 230 comprises a longitudinal extent, as shown along the y-direction. The mounting assembly 220 is arranged such that the securing portions 222 are parallel to the longitudinal extent of the body 230. In other words, when the mounting assembly 220 is attached to the circuitry enclosure 210 and when the body 230 is connected to the securing portions 222, the securing portions 222 are (substantially) parallel to the longitudinal extent of the body 230.

In some examples, the body 230 may comprise a sloped upper surface to divert water runoff. For example, the upper face of the body 230, i.e., the face illustrated in FIG. 2 at the highest value along the y-direction, may be sloped.

The fixing arrangement 240 is configured to connect the body 230 to the securing portion 222 of the mounting assembly 220. In particular, the fixing arrangement 240 is configured to maintain the connection between the body 230 and the mounting assembly 220 even when the body 230 has deformed, as shown in FIG. 3. In the illustrated examples, the fixing arrangement 240 is arranged to extend (substantially) perpendicular to the longitudinal extent of the body 230 and to the securing portions 222 (i.e., along the x-direction).

The fixing arrangement 240 comprises a bias configured to enable movement of the body 230 in relation to the mounting assembly 220 when the body 230 is connected to the mounting assembly 220. In particular, as the body 230 comprises plant tissue, the bias is configured to compensate for deformation of the body 230 to maintain a fastening force, as illustrated in FIG. 3. In other words, the bias is configured to react against the deformation (e.g., in at least a first direction) of the body 230. The amount of deformation experienced by the body is dependent on the material from which the body is formed from. For example, a body comprising hygroscopic material, such as wood, will deform more than a body comprising cork, although cork will also potentially deform over time.

In the illustrated example, the mounting assembly 220 comprises a plurality of securing portions 222. The electric vehicle charging point 200 may comprise a plurality of fixing arrangements 240 configured to connect the body 230 to each securing portion 222. Alternatively, the fixing arrangement 240 may comprise a plurality of arrangements, each configured to connect the body 230 to a respective securing portion 222.

In some examples, the electric vehicle charging point 200 may comprise circuitry housed within the circuitry enclosure 210 (not illustrated). The circuitry housed within the circuitry enclosure 210 may comprise at least one resistor. In some examples, the circuitry may comprise one or more residual current devices (RCD). In some examples, the circuitry may comprise one or more converters configured to convert the supply power received by the circuitry (i.e., the supply power received by the electric vehicle charging point 200). In some examples, the circuitry may comprise one or more filters configured to filter the supply power received by the circuitry.

The circuitry housed within the circuitry enclosure 210 may be configured to provide a power output of at least 3 kW, or preferably of at least 3.6 kW, or preferably of at least 4 kW. The circuitry may be configured to provide a current output of least 15 amps.

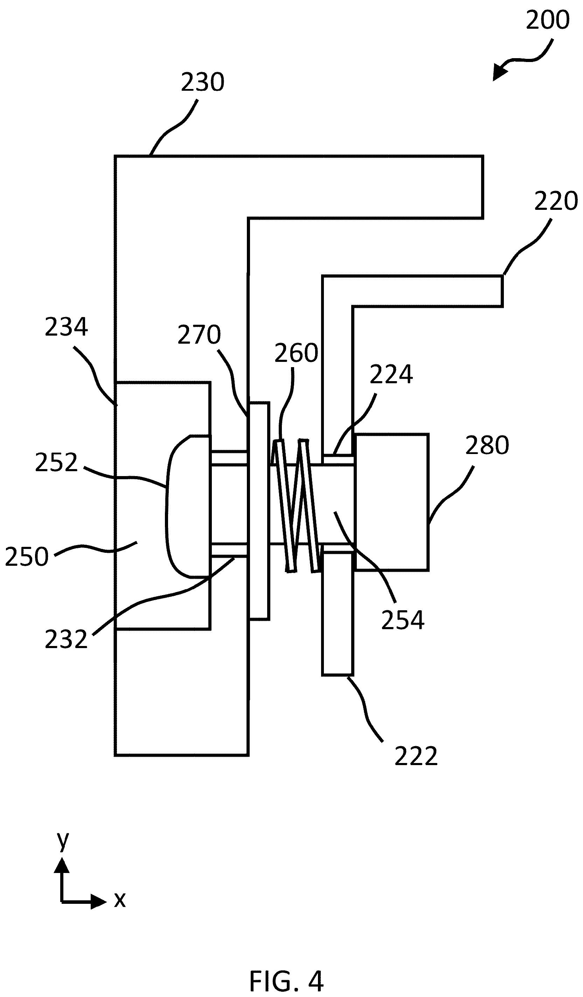

FIG. 4 shows a close-up view of an example fixing arrangement 240. The example illustrated in FIG. 4 may be the same fixing arrangement 240 as described above in relation to FIGs. 2 and 3.

The illustrated fixing arrangement 240 comprises a fastener 250 (comprising a head 252 and an elongate shaft 254), a helical spring 260 (such as a compression spring), a washer 270, and a mating part 280. The fastener 250 and the mating part 280 are configured to be corresponding mating parts, such that, when an end of the fastener 250 is received by the mating part 280, the fastener 250 and the mating part 280 are fixedly attached. In some examples, the fastener 250 may comprise a threaded portion configured to be received by a corresponding threaded portion of the mating part 280. The fastener 250 may be a screw or a bolt, and the mating part 280 may be a corresponding nut. In some examples, the fastener 250 may be a rivet and the mating part 280 may be a corresponding rivet nut. In some examples, the amount of the fastener 250 received by the mating part 280 may be restricted, i.e., the mating part 280 may receive a maximum amount of the fastener 250.

As illustrated in FIG. 4, the fastener 250 is configured to extend through the body 230 and the securing portion 222, and an end of the fastener 250 is configured to be received by the mating part 280. In other words, the mating part 280 is configured to receive and engage with a portion of the fastener 250 through the securing portion 222 such that the body 230 and the mounting assembly 220 are connected.

The body 230 may comprise a connecting hole 232 and the fastener 250 may be configured to extend through the connecting hole 232. When the elongate shaft 254 is received by the connecting hole 232, a clearance (in at least one direction) may be provided between the elongate shaft 254 and the connecting hole 232. This therefore allows (at least some) movement of the body 230, due to deformation of the body 230, in the perpendicular axes from the elongate shaft of the fastener 250 (i.e., in the y- and/or z-directions). In some examples, the connecting hole 232 may, in at least one direction, be (at least) 1.4 times wider than the fastener 250 (i.e., than the elongate shaft 254 of the fastener 250). In some examples, the connecting hole 232 and the fastener 250 may have a circular cross-section, and the diameter of the connecting hole 232 is (at least) 1.4 times the diameter of the fastener 250 (i.e., the diameter of the elongate shaft 254 of the fastener 250).

In addition, the securing portion 222 is configured to receive at least a portion of the fastener 250. In FIG. 4, the securing portion 222 comprises a hole 224 and the fastener 250 is configured to extend through the hole 224 of the securing portion 222 when the body 230 is connected to the mounting assembly 220. Therefore, the fastener 250 is configured to extend through the connecting hole 232 of the body 230 and the hole 224 of the securing portion 220, and configured to be at least partially received by the mating part 280 when the fixing arrangement 240 connects the body 230 to the mounting assembly 220.

The body 230 may further comprise a depression 234 (e.g., a recess) such that a portion of the fastener 250 is positioned in the depression 234 when the fixing arrangement 240 connects the body 230 to the mounting assembly 220 (i.e., to the securing portion 222). In the illustrated example of FIG. 4, the connecting hole 232 is arranged to extend from within the depression 234. The depression 234 may therefore be configured to at least partially conceal a portion of the fixing arrangement 240.

In some examples, a washer may be positioned in the depression 234. The dimensions of the depression 234, in the y- and z-directions (where the z-direction is orthogonal to the illustrated x- and y-directions), are arranged to be larger than the washer. In some examples, the washer may be circular, and the depression 234 may have a diameter which is between 5 and 15 % larger than the diameter of the washer. In some examples, the diameter of the depression 234 may be 12 % larger than the diameter of the washer. The washer positioned in the depression 234 receives at least a portion of the fastener 250 when the fixing arrangement 240 connects the body 230 to the mounting assembly 220 (i.e., to the securing portion 222). In other words, the washer is positioned between a head 252 of the fastener and the connecting hole 232 of the body 230.

In FIG. 4, the fastener 250 is an elongate fastener comprising a head 252 and an elongate shaft 254, where the elongate shaft 254 extends from the head 252. The elongate shaft 254 is configured to extend through the body 230 and through the securing portion 222, when the body 230 is connected to the mounting assembly 220. The end of the fastener 250 to be received by the mating part 280 is arranged at a distal end of the elongate shaft 254 from the head 252.

In some examples, the elongate shaft 254 of the fastener 250 may have a circular cross-section. The connecting hole 232 of the body 230 and/or the hole 224 of the securing portion 222 may be circular. The connecting hole 232 of the body 230 and/or the hole 224 of the securing portion 222 may be slotted.

In some examples, the mating part 280 comprises a stop which is configured to restrict the portion of the fastener 250 received by the mating part 280. Therefore, there is a maximum amount of the fastener 250 which the mating part 280 can receive. In other words, the fixing arrangement 240 is configured to achieve a peak tightness, as determined by the stop of the mating part 280. In some examples, the stop may be a partial closure at one end of the mating part 280 to prevent the fastener 250 from extending further through the mating part 280. In this manner, the stop may be a lip which restricts the amount of the fastener 250 received, or receivable, by the mating part 280. The mating part 280 may be a lock nut, such as a nut with a nylon insert. In some examples, the stop may be a total closure at an end of the mating part 280. The stop may be a cap, or a dome, such that the mating part 280 is a cap nut or a dome nut. The mating part 280 may be a blind nut.

In some examples, a portion of the mating part 280 may be received by the hole 224 of the securing portion 222 when the body 230 is connected to the mounting assembly 220 by the fixing arrangement 240. The mating part 280 may be fixedly engaged (e.g., rotationally and/or axially) with the securing portion 222 (i.e., the hole 224 of the securing portion 222) when the body 230 is connected to the mounting assembly 220. The portion of the mating part 280 may be configured to form an interference fit when received by the hole 224 of the securing portion 222. The mating part 280 may be expandable, such as an expanding nut, and may be configured to expand into the hole 224 of the securing portion 222 when engaged with the portion of the fastener 250. In some examples, the mating part 280 may be a rivet nut.

As illustrated in FIG. 4, the helical spring 260 is positioned between the body 230 and the securing portion 222. Therefore, the helical spring 260 is configured to impart the bias along an axis parallel to the elongate shaft 254 of the fastener 250, i.e., along the x-direction. This is because a portion of the fastener 250 is received by the helical spring 260 and the tension of the helical spring 260 is along the axis parallel to the elongate shaft 254 of the fastener 250, i.e., in the x-direction. When the body 230 is connected to the mounting assembly 220, i.e., the mating part 280 is engaged with the fastener 250, the helical spring 260 is at least partially compressed.

In the illustrated example, the washer 270 is also positioned between the body 230 and the securing portion 222. In particular, the washer 270 is positioned between the body 230 and the helical spring 260. The washer 270 may be circular. The helical spring 260 is arranged to abut against a surface of the washer 270 and a surface of the securing portion 222. In some examples, the fixing arrangement 240 may comprise a further washer positioned between the helical spring 260 and the surface of the securing portion 222, such that the helical spring 260 is arranged to abut against a surface of the further washer rather than abut against a surface of the securing portion 222. In particular, the helical spring 260 may be arranged to abut against each washer, which is configured to spread the exerted load across an opening of a connecting hole 232 of the body 230, and the hole 224 of the securing portion 222.

In some examples, the ends of the helical spring 260 are flat (e.g., ground, or squared ends). The ends of the helical spring 260 may comprise closed or open ends. It may be that the helical spring 260 comprises closed and ground ends, or closed and squared ends. In some examples, the helical spring 260 may comprise open and ground ends.

Although depicted as a helical spring 260, any form of spring configured to be at least partially compressible is envisaged. The spring used in the fixing arrangement 240 may be at least partially compressed when the body 230 is connected to the securing portion 222. In some examples, the spring may be configured to receive at least a portion of the fastener 250 (e.g., a portion of the elongate shaft 254). For example, the spring may comprise a hole configured to receive at least a portion of the fastener 250. The spring may be one or more disc springs, one or more leaf springs, a volute spring, one or more flat springs, a gas spring, or an air spring. In some examples, the spring may be replaced with a bellow, e.g., a metal bellow, configured to be at least partially compressible.

The helical spring 260 is configured to create the bias, which is configured to compensate for deformation of the body 230 to maintain a fastening force. This therefore enables movement of the body 230 in relation to the mounting assembly 220. The helical spring 260 is configured to urge at least a portion of the bias against the fastener 250, e.g., the head 252 of the fastener 250. The helical spring 260 is configured to urge at least a portion of the bias against the body 230. The helical spring 260 may have a spring constant which is greater than, or equal to, 0.05 N/mm.

As illustrated in FIG. 4, the helical spring 260 comprises more than one turn (e.g., a plurality of turns) and is configured to receive at least a portion of the fastener 250 (e.g., a portion of the elongate shaft 254). When the body 230 is connected to the mounting assembly 220 (i.e., the securing portion 222), a spacing is provided between the turns of the helical spring 260. In other words, the helical spring 260 may be partially compressed when the body 230 is connected to the mounting assembly 220, and not fully compressed. When at a peak tightness, the helical spring 260 is not coil bound, i.e., is able to deform bidirectionally. Therefore, when the body 230 is connected to the mounting assembly 220, the pitch between the turns of the helical spring 260 may be less than the pitch of the helical spring 260 in a relaxed state, i.e., when uncompressed. The spacing therefore allows, as the body 230 deforms, the helical spring 260 to move bidirectionally, in either direction along the x-direction. In other words, the compression of the helical spring 260 may be increased or decreased during deformation of the body 230. This therefore compensates for the (unpredictable) deformation of the body 230 to maintain the fastening force.

When the body 230 is connected to the mounting assembly 220 by the fixing arrangement 240, a gap may be present between the body 230 and the securing portion 222. For example, there may be a gap between the body 230 and the securing portion 222 when the fixing arrangement 240 is at a peak tightness. The gap is arranged to provide space for the body 230 to move into when deforming. This movement restricts the amount of stress exerted onto the securing portion 222 during deformation, or the securing portion 222 damaging the body 230, which would occur if the body 230 contacted the securing portion 222.

The bias created by the helical spring 260 may be insufficient to move the securing portion 222 farther from the body 230. In particular, the connection between the mating part 280 and the securing portion 222, and the rigidity of the securing portion 222, may be such that the bias created by the helical spring 260 is insufficient to move the securing portion 222 farther from the body 230. Further, the body 230 may be arranged such that the bias created by the helical spring 260 is insufficient to move the body 230 farther from the securing portion 222.

In the illustrated example, the washer 270 is, in at least one direction (e.g., the y-direction), 2 times wider than the connecting hole 232. In some examples, the washer 270 may, in at least one direction, be more than 2 times as wide as the connecting hole 232. This therefore spreads the load exerted onto the washer 270 by the helical spring 260 across the body 230. This can advantageously reduce the amount of damage caused on the body 230. The size of the washer 270, in comparison to the size of the connecting hole 232, allows contact to be maintained with the body 230 when the body 230 deforms. In other words, even if the size of the connecting hole 232 changes over time (i.e., due to deformation of the body 230) the washer 270 maintains contact therefore maintaining the connection between the body 230 and the mounting assembly 220. In some examples, the connecting hole 232 and the washer 270 may have a circular cross-section, and the diameter of the washer 270 is 2 times the diameter of the connecting hole 232.

In some examples, the electric vehicle charging point 200 may comprise a compression limiter (not illustrated). The compression limiter may be positioned between the body 230 and the securing portion 222. The compression limiter may be configured to limit further tightening of the fixing arrangement 240 and enable a degree of freedom of movement/deformation of the body 230 when the fixing arrangement 240 is at a peak tightness as determined by the compression limiter. The compression limiter may be a hollow sleeve of material having a higher Young's modulus than the material forming the body 230. The compression limiter may therefore prevent the fastener 250 damaging (e.g., crushing) the body 230. In some examples, the compression limiter may be configured to (at least partially) receive the helical spring 260.

Although the compression limiter is not illustrated in FIG. 4, the compression limiter would be arranged to abut against the washer 270 and against the securing portion 222, i.e., be positioned at least partially inside the connecting hole 232. In particular, the compression limiter would abut against an underside of the washer 270 (i.e., the side of the washer 270 abutting against the body 230 in FIG. 4) and abut against an upper side of the securing portion 222 (i.e., the surface of the securing portion 222 closest to the body 230). The compression limiter may therefore ensure that the gap between the securing portion 222 and the body 230 is maintained. The length of the compression limiter is therefore equal to the distance between the underside of the washer 270 and the upper side of the securing portion 222 (i.e., the combination of the length of the connecting hole 232 and the gap). The internal diameter of the compression limiter may be such that a clearance is provided between the inside of the compression limiter and the elongate shaft 254 of the fastener 250. For example, the internal diameter of the compression limiter may, in at least one direction, be between 1.4 and 2 times wider than the fastener 250 (i.e., the elongate shaft 254 of the fastener 250).

The fixing arrangement 240 is illustrated in a particular order in FIG. 4. However, it is envisaged that the components of the fixing arrangement 240 may be in a different order. For example, the head 252 of the fastener 250 may be arranged to engage with the securing portion 222, and the mating part 280 may be arranged to engage with the body 230. An additional helical spring, may be positioned between the head 252 of the fastener 250 and the securing portion 222, or between the mating part 280 and the securing portion 222.

In the illustrated examples, the mounting assembly 220 comprises a plurality of securing portions 222. The fixing arrangement 240 comprises a respective plurality of fasteners 250 and each fastener 250 is configured to extend through a respective connecting hole 232 in the body 230 to connect the body 230 to a respective securing portion 222. In particular, the fixing arrangement 240 comprises a plurality of fasteners 250, a plurality of helical springs 260, a plurality of washers 270, and a plurality of mating parts 280. Each respective set of fastener, helical spring, washer and mating part are arranged to be connected as described above.

The electric vehicle charging point 200 illustrated in FIG. 5 may be the same as the electric vehicle charging point 200 described above in relation to FIGs. 1 to 4. The difference is that the circuitry enclosure 210 illustrated in FIG. 5 comprises a socket 212 configured to receive a charging connector for providing power from circuitry housed therein to an electric vehicle, as described above in relation to FIG. 1. In particular, the socket 212 is arranged on a front face of the circuitry enclosure 210. In some examples, the electric vehicle charging point 200 is a tethered charging point, and the socket may be fixedly connected to a connector of a charging cable.

In addition, the example illustrated in FIG. 5 includes the power supply 500 being received by the circuitry enclosure 210, where the power supply 500 is configured to supply power to circuitry housed within the circuitry enclosure 210 as described above. The circuitry enclosure 210 therefore comprises a hole or a slot, or the like, for receiving the power supply.

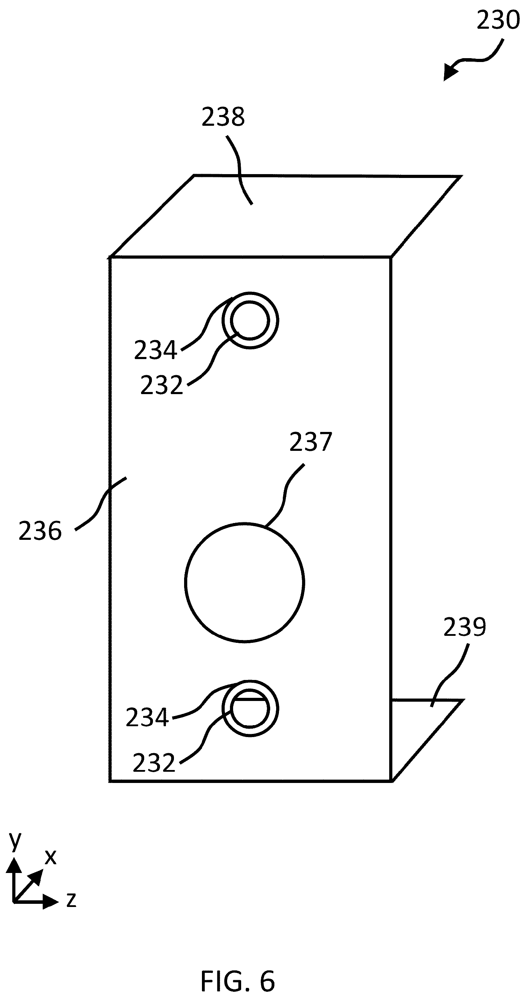

The body 230 illustrated in FIG. 5 may comprise a discontinuity arranged, when the body 230 is connected to the mounting assembly 220, to receive at least a portion of the charging connector when connected to the socket 212 of the circuitry enclosure 210. The discontinuity of the body 230 is illustrated in FIG. 6. In some examples, the socket 212 may protrude from the body 230 when the body 230 is connected to the mounting assembly 220, as illustrated in FIG. 5. In other words, the discontinuity of the body 230 is arranged to receive at least a portion of the socket 212 when the body 230 is connected to the mounting assembly 220. In some examples, the body 230 may be arranged such that the socket 212 does not protrude from the discontinuity of the body 230. In some examples, the body 230 may be arranged to receive at least a portion of the charging cable when connected to the socket 212 of the circuitry enclosure 210.

In particular, FIG. 6 illustrates the body 230 for providing access to the socket 212 of the circuitry enclosure. The illustrated example shows two connecting holes 232 in depressions 234 on a front face 236 of the body 230, as described above in relation to FIG. 4. The front face 236 also comprises the discontinuity 237 for providing access to the socket 212 of the circuitry enclosure 210 to connect a charging cable to the circuitry housed within the circuitry enclosure 210. The illustrated body 230 also comprises a top face 238 and a bottom face 239, each arranged to at least partially cover the mounting assembly 220 and/or the circuitry enclosure 210, as described above.

The positioning of the discontinuity 237 in the body 230 is dependent on the positioning of the socket 212. Although depicted as being positioned in the front face 236 of the body 230, the discontinuity 237 may be positioned on any other face of the body 230. For example, the top face 238, the bottom face 239, or a side face (not illustrated).

In some examples, the body 230 may not comprise a discontinuity 237, and a charging cable is to be positioned around the body 230 when connected to the electric vehicle for charging. For example, the electric vehicle charging point 200 may be a tethered charging point such that the charging cable is fixedly connected to the electric vehicle charging point 200. The body 230 is then positioned to account for the tethered charging cable. The tethered charging cable may be positioned to the side of the electric vehicle charging point 200, and the body 230 covers the front of the electric vehicle charging point 200.

In some examples, the body 230 may be arranged to receive a portion of the power supply 500 configured to supply power to circuitry housed in the circuitry enclosure 210. For example, the body 230 may comprise a hole or a slot configured to receive a portion of the power supply 500.

In some examples, the body 230 may comprise one or more further holes, each arranged to receive at least a portion of a respective LED, such that light provided by the LEDs is visible through the one or more further holes of the body 230. In other words, the one or more further holes are arranged to allow visual indications provided by the LEDs to be visible through the one or more further holes. The one or more further holes may be positioned on the front face 236 of the body 230.

In some examples, the body 230 may comprise a holder configured to receive and hold a portion of a charging cable.

In some examples, the body 230 may comprise a further discontinuity to provide access to a RFID reader (as described above) of the electric vehicle charging point 200.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or more" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An electric vehicle charging point comprising:
a circuitry enclosure configured to house circuitry for charging an electric vehicle;
a mounting assembly configured to be attached to the circuitry enclosure, wherein the mounting assembly comprises a securing portion;
a body configured to at least partially cover the circuitry enclosure and to at least partially cover the mounting assembly, wherein the body comprises plant tissue; and
a fixing arrangement configured to connect the body to the securing portion of the mounting assembly, wherein the fixing arrangement comprises a bias configured to enable movement of the body in relation to the mounting assembly when the body is connected to the mounting assembly.

2. The electric vehicle charging point of claim 1, wherein the body is made from tree tissue.

3. The electric vehicle charging point of any preceding claim wherein the fixing arrangement comprises a fastener configured to extend through a connecting hole in the body, and wherein, optionally, in at least one direction, the connecting hole in the body is 1.4 times wider than the fastener, and wherein, optionally, the fastener comprises an elongate shaft, and the bias is imparted along an axis parallel to the elongate shaft of the fastener, and wherein, optionally, the fixing arrangement comprises a mating part configured to receive and engage with a portion of the fastener through the securing portion such that the body and the mounting assembly are connected, and wherein, optionally, the mating part comprises a stop configured to restrict the portion of the fastener received by the mating part, and wherein, optionally, the electric vehicle charging point comprises a compression limiter configured to limit further tightening of the fixing arrangement and enable a degree of freedom of movement of the body when the fixing arrangement is at a peak tightness as determined by the compression limiter.

4. The electric vehicle charging point of any preceding claim, wherein the fixing arrangement comprises a spring configured to create the bias, and wherein, optionally, the spring is a helical spring comprising more than one turn, and wherein, optionally, the spring is arranged between the body and the securing portion, and wherein, optionally, when the body is connected to the circuitry enclosure, a spacing is provided between turns of the spring.

5. The electric vehicle charging point of any preceding claim, wherein the mounting assembly comprises a plurality of securing portions, wherein the fixing arrangement is configured to connect the body to each securing portion, and wherein, optionally, the fixing arrangement comprises a plurality of fasteners each configured to extend through a respective connecting hole in the body to connect the body to a respective securing portion.

6. The electric vehicle charging point of any preceding claim, wherein the body comprises a longitudinal extent, and wherein the securing potion is arranged parallel to the longitudinal extent of the body when the mounting assembly is attached to the circuitry enclosure and when the body is connected to the securing portion.

7. The electric vehicle charging point of any preceding claim, wherein the mounting assembly is arranged to mount the electric vehicle charging point to a surface.

8. The electric vehicle charging point of any preceding claim, wherein the mounting assembly is configured to form a seal with the circuitry enclosure to provide a closed enclosure for housing circuitry therein, and wherein, optionally, the circuitry enclosure comprises an open face, wherein the mounting assembly comprises a plate, and wherein, when the mounting assembly is attached to the circuitry enclosure, the plate of the mounting assembly is arranged to cover the open face of the circuitry enclosure to form the seal with the circuitry enclosure.

9. The electric vehicle charging point of any preceding claim, wherein the circuitry enclosure comprises a socket configured to receive a charging connector for providing power from circuitry housed therein to an electric vehicle, and wherein the body comprises a discontinuity arranged, when the body is connected to the mounting assembly, to receive at least a portion of the charging connector when connected to the socket of the circuitry enclosure.

10. The electric vehicle charging point of any preceding claim, wherein the body is arranged to receive a portion of a power supply configured to supply power to circuitry housed in the circuitry enclosure.

11. The electric vehicle charging point of any preceding claim, wherein the circuitry enclosure is arranged to form a cavity configured to house circuitry therein.

12. The electric vehicle charging point of any preceding claim comprising one or more light emitting diodes.

13. The electric vehicle charging point of any preceding claim, wherein the electric vehicle charging point is configured to provide a power output of at least 3 kW.

14. The electric vehicle charging point of any preceding claim, wherein the power output from the electric vehicle charging point is at least 3.6 kW.

15. The electric vehicle charging point of any preceding claim comprising circuitry housed within the circuitry enclosure, wherein the circuitry comprises at least one resistor.
